# EUROPEAN PATENT APPLICATION

(11) **EP 4 645 723 A1**
(43) Date of publication of application: **05.11.2025**
(21) Application number: 25172510.7
(22) Date of filing: 25.04.2025
(51) Int. Cl.: H04L 1/00

(54) **SYSTEMS FOR AND METHODS FOR LARGE PACKET SUPPORT OVER WI-FI**

(30) Priority: 29.04.2024 IN 202421033845; 29.10.2024 US 202418930849
(71) Applicant: Avago Technologies International Sales Pte. Limited, Singapore 768923 (SG)
(72) Inventor: Neelakandan, Sriram, Irvine, 92618 (US); Tadahal, Shivkumar Basavaraj, Irvine, 92618 (US); Adhikari, Shubhodeep, Irvine, 92618 (US); Verma, Sindhu, Irvine, 92618 (US); Pulikkoonattu, Rethnakaran, Irvine, 92618 (US); Kamath, Manoj Raveendranath, Irvine, 92618 (US)
(74) Representative: Dilg, Haeusler, Schindelmann Patentanwaltsgesellschaft mbH

(57) **Abstract**

A device may advertise a first information element indicating a first maximum size for MAC protocol data unit, MPDU, frames for the first device (602). A device may select, based at least on the first maximum size, a first polynomial for a cyclic redundancy check, CRC, for an MPDU frame received from a second device (604, 606). A device may compute, using the selected first polynomial, a CRC for the received MPDU frame. A device may detect, based at least on the computed CRC, an error in the MPDU frame.

## Description

### Field of the Disclosure

This application claims the benefit of and priority to Indian Provisional Patent Application No. 2024-21033845, filed April 29, 2024, which is hereby incorporated herein by reference in its entirety.

### Field of the Disclosure

This disclosure generally relates to systems and methods for communication between devices, such as Wi-Fi devices and more particularly, to frame aggregation, such as MAC Service Data Unit (MSDU) aggregation.

### Background of the Disclosure

In the last few decades, the market for wireless communications devices has grown by orders of magnitude, fueled by the use of portable devices, and increased connectivity and data communication between all manners of devices. Digital and radio frequency (RF) circuit fabrication improvements, as well as advances in circuit integration and other aspects have made wireless equipment smaller, cheaper, and more reliable. However, widespread propagation of these devices can congest transmission mediums, such as for wireless communications in home, office, or industrial environments.

### Summary

In 802.11 Wireless Local Area Network (WLAN) specifications, the maximum supported MAC Protocol Data Unit (MPDU) length is 11,454 bytes. The limit was imposed as part of 802.11n (HT), ac (VHT) protocol specifications. The same was continued for 802.11ax(HE) and 802.11be (EHT) specifications. This limit stems from the usage of current IEEE-CRC-32 polynomial used to compute the frame check sequence (FCS) for an MPDU.

The current thirty-two-bit CRC (cyclic redundancy check) uses a polynomial which can be used to detect up to four bits of error detection for an MPDU size of up to 11,454 bytes. To increase throughput between 802.11 capable WLAN devices at fixed PHY performance, the devices can increase the number of MSDUs in an aggregated MSDU (A-MSDU), as may extend the length of an A-MSDU. Increasing the number (and length) of MSDUs in an A-MSDU (aggregated MAC service data unit) will depend on and be limited by specification and/or peer capabilities. The WiFi-7 specification, for example, does not provide for MPDU larger than 11,454 for various STA and AP that are deployed in a wide number of consumer devices. Although newer and higher data rates (13x2) and higher bandwidth (320Mhz) have been introduced in WiFi-6 and 7, the MAC byte limit has not been increased.

According to the present disclosure, the maximum size of an MPDU or A-MSDU is increased to achieve better throughput between two WLAN devices without increasing the negotiated Block-ACK Window Size (or number of MPDUs in an A-MPDU). Updating the existing IEEE-CRC-32 polynomial will improve error detection for larger MPDU sizes. Although a Wi-Fi physical layer (PHY) is able to decode these longer packets, the MAC layer has been limited to MPDUs as limited to 11454 bytes. Embodiment of the present disclosure can aid the MAC to release more bytes to the PHY layer, aiding the MAC layer to utilize the longer packet capability of the PHY later.

Peer-negotiation can be implemented using a special capability bit-flag or other indication in an association request or response frame or in the A-MPDU setup frames (add block acknowledgement request/response), to exchange a larger payload between the devices. Once exchange the Wi-Fi station (STA), such as a WiFi-8 STA can send and receive frames including MPDU larger 11,454 bytes (e.g., 64 kilobytes MPDU) to another node such as another STA device in an ad hoc network or an AP.

The IEEE 802.11 (e.g., 802.11be) protocol defines the MPDU as formed by encapsulating the MSDU (or A-MSDU) with the MAC header and a frame check sequence (FCS). The FCS serves as a packet integrity check and may be positioned as a suffix in each MPDU. A 32-bit CRC polynomial (IEEE-CRC-32) is used to compute the FCS. A prime polynomial was originally introduced in 802.11 amendments in the 1990s. Existing IEEE-CRC-32 polynomial yield a minimum Hamming distance of four or higher up to a maximum size of 11,454 (this corresponds to a maximum MPDU size). Beyond this packet length, number of detectable bits falls to three. According to the present disclosure, a factorable polynomial can improve detection performance for MPDU exceeding 11,454 bytes, while maintaining inter-operability of devices which may not be configured to use the factorable polynomial.

In some aspects, the techniques described herein relate to a system including: a first device configured to: advertise a first information element indicating a first maximum size for MAC protocol data unit (MPDU) frames for the first device; select, based at least on the first maximum size, a first polynomial for a cyclic redundancy check (CRC) for an MPDU frame received from a second device; compute, using the selected first polynomial, a CRC for the received MPDU frame; and detect, based at least on the computed CRC, an error in the MPDU frame.

In some aspects, the techniques described herein relate to a system, wherein the first device is configured to: advertise the first information element incident to media access control (MAC) association between the first device and the second device; select the first polynomial responsive to the receipt of a first response to the first information element indicating the first maximum size for MPDU frames for the second device; and select a second polynomial, different from the first polynomial, responsive to the receipt of a second response to the first information element indicating a second maximum size for MPDU frames for the second device.

In some aspects, the techniques described herein relate to a system, wherein the first device is configured to: transmit, using the second polynomial, beacon frames or probe response frames; and transmit, using the first polynomial, other frames to the second device.

In some aspects, the techniques described herein relate to a system, wherein: the first polynomial is a factorable polynomial; and the second polynomial is a prime polynomial.

In some aspects, the techniques described herein relate to a system, wherein the first maximum size is greater than 11,454 bytes.

In some aspects, the techniques described herein relate to a system, wherein the first maximum size is selected from the group consisting of sixteen kilobytes, twenty-four kilobytes, and thirty-two kilobytes.

In some aspects, the techniques described herein relate to a system, wherein the second maximum size is 11,454 bytes.

In some aspects, the techniques described herein relate to a system, wherein the first polynomial is 0xC9D204F5.

In some aspects, the techniques described herein relate to a system, wherein the first information element is included within one of: a beacon frame; a probe response frame; a reassociation request frame; a reassociation response frame; an add block acknowledgment (ADDBA) request frame; or an ADDBA Response Frame.

In some aspects, the techniques described herein relate to a system, wherein the first device is an AP device, and the second device is a non-AP device.

In some aspects, the techniques described herein relate to a system, wherein the MPDU frame includes channel state information of a beamforming feedback matrix.

In some aspects, the techniques described herein relate to a method including: advertising, by a first device, a first maximum size for MAC protocol data unit (MPDU) frames for the first device; selecting, based at least on the first maximum size, a first polynomial for a cyclic redundancy check (CRC) for an MPDU frame received from a second device; computing, using the selected first polynomial, a CRC for the received MPDU frame; and detecting, based at least on the computed CRC, an error in the MPDU frame.

In some aspects, the techniques described herein relate to a method, further including: receiving, by the first device, a response from the second device indicating a second maximum size for MPDU frames for the second device; and selecting a second polynomial based at least on the second maximum size, the first maximum size exceeding the second maximum size.

In some aspects, the techniques described herein relate to a method, wherein the advertisement of the first maximum size is provided in a first information element incident to media access control (MAC) association between the first device and the second device.

In some aspects, the techniques described herein relate to a method, further including: transmitting, by the first device, beacon frames or probe response frames using a second polynomial, smaller than the first polynomial; and transmitting, by the first device to the second device, other frames using the first polynomial to the second device.

In some aspects, the techniques described herein relate to a method, further including: using the second polynomial for one or more of: CRC encoding; or CRC decoding, wherein the first polynomial is 0xC9D204F5.

In some aspects, the techniques described herein relate to a method, wherein the first device is an AP device, and the second device is a non-AP device.

In some aspects, the techniques described herein relate to a method, wherein the MPDU includes a complete beamforming feedback matrix including channel state information for a plurality of channels.

In some aspects, the techniques described herein relate to a device configured to: advertise a first information element indicating a first maximum size for MAC protocol data unit (MPDU) frames for the device; select, based at least on the first maximum size, a factorable polynomial for a cyclic redundancy check (CRC) for an MPDU frame received from a second device; compute, using the factorable polynomial, a CRC for the received MPDU frame; and detect, based at least on the computed CRC, an error in the MPDU frame.

In some aspects, the techniques described herein relate to a device, further configured to: advertise the first maximum size for MPDU frames to a third device; select, based at least on a response from the third device, a prime polynomial for a cyclic redundancy check (CRC) for a second MPDU frame received from the third device; compute, using the prime polynomial, a second CRC for the received MPDU frame; and detect, based at least on the second computed CRC, an error in the second MPDU frame.

In some aspects, the techniques described herein relate to a device, wherein: the first information element is a beacon frame; and the response is included in a probe response frame corresponding to the beacon frame.

In some aspects, the techniques described herein relate to a device, wherein the MPDU frame includes channel state information of a beamforming feedback matrix.

### Brief Description of the Drawings

Various objects, aspects, features, and advantages of the disclosure will become more apparent and better understood by referring to the detailed description taken in conjunction with the accompanying drawings, in which reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments;
FIGs. 1B and 1C are block diagrams depicting computing devices useful in connection with the methods and systems described herein, according to some embodiments;
FIG. 2 is a register diagram for aggregated frames, according to some embodiments;
FIG. 3 is a hamming distance graph for selected polynomials, as applied to codewords of variable lengths, according to some embodiments;
FIG. 4 is an undetectable error graph for selected polynomials, as applied to codewords of variable lengths, according to some embodiments;
FIG. 5 is a register diagram for an MPDU delimiter, according to some embodiments; and
FIG. 6 is a sequence diagram for data transmission, according to some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

For purposes of reading the description of the various embodiments below, the following descriptions of the sections of the specification and their respective contents can be helpful:
- Section A describes a network environment and computing environment which can be useful for practicing embodiments described herein; and

- Section B describes embodiments of large packet support over Wi-Fi.

### A. Computing and Network Environment

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

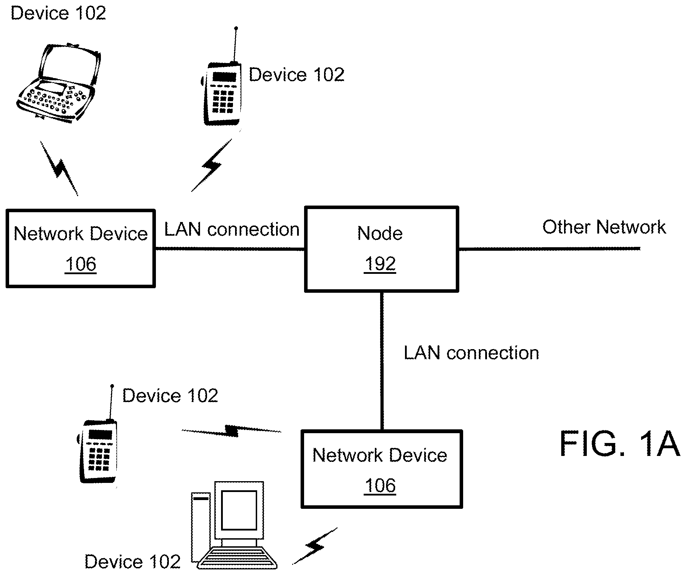

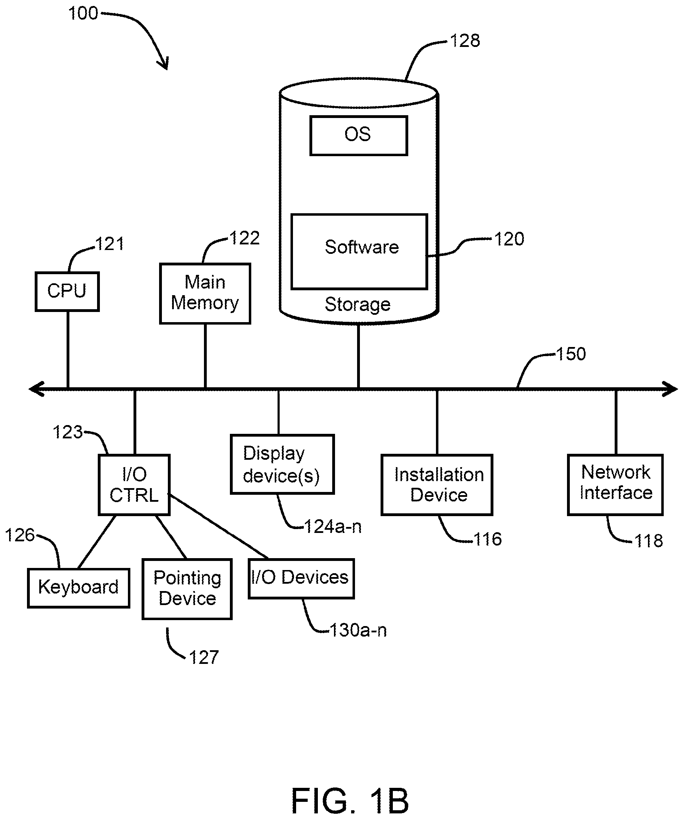

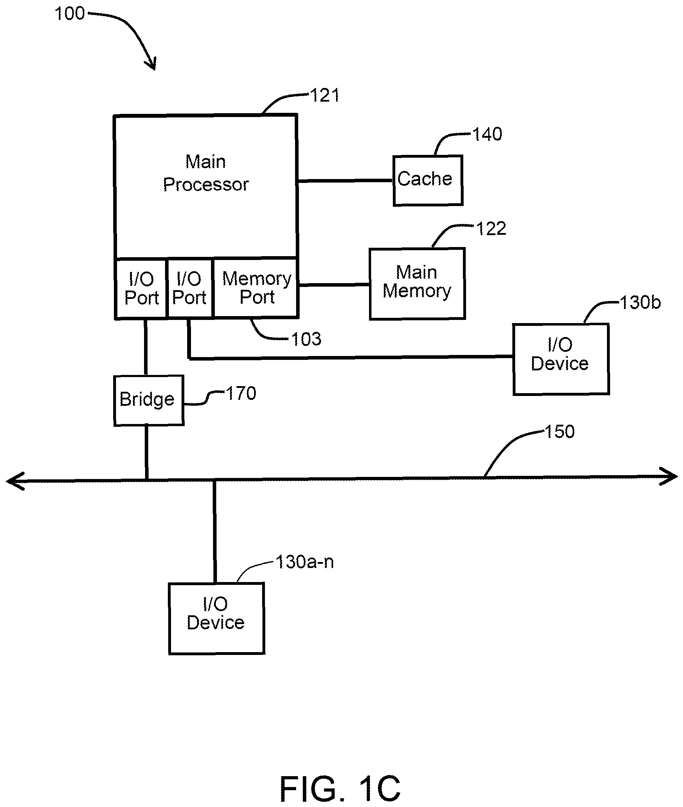

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

A device may refer to and/or include at least one integrated circuit, a general purpose processor, a multicore processor, a software programmable device, or a programmable logic controller among other possible circuitry and/or hardware configured to communicate incident to the execution of instructions, in some embodiments. In some embodiments, a network device 106 or AP includes a device or module (including a combination of hardware and software) that allows wireless communication devices 102 to connect to a wired network using Wi-Fi, or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency-based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### a. B. Large Packet Support over Wi-Fi

Disclosed herein are systems and methods of frame aggregation. Frame aggregation can consolidate network communications into a fewer number of transmissions. Such aggregation can lower overhead relative to providing several separate transmissions. For example, reductions in overhead can be realized incident to decreased header or other frame portions as may be repeated when sending multiple packets, as well as according to reduced negotiations for access to a shared medium, as in the case of transmission opportunities (TXOPs) in a Wi-Fi network. On the other hand, communicating overly large data structures can also lower effective network throughput, as retransmission of data can extend usage of a medium. Moreover, existing devices using communications protocol parameters can be substantial, such that adjusting aggregations size limits can lead to interoperation challenges with legacy devices or other layers of a stack. For example, PHY operation should support application-level aggregation sizes (and vice versa). Similarly, checksums or other non-payload information should support a selected level of aggregation.

Checksums can include cyclic redundancy checks (CRC), an error-detecting code that can be appended to data as a transmitted CRC so that upon dividing the data by a predetermined polynomial, a computed CRC can be determined. If the bits of the data (and the transmitted CRC) are not corrupted, the transmitted CRC should equal the computed CRC. If the data is corrupted, the corruption can be detected according to a discrepancy between the transmitted and computed CRC (and in some cases, corrected for). Various polynomials may be more or less suited to detect particular types of errors. For example, prime (or irreducible) polynomials are highly effective at detecting burst errors, where a sequence of consecutive bits is corrupted. Factorable polynomials, such as those divisible by (x+1), can aid in the detection of any odd number of bit errors, since such errors will introduce a remainder when divided thereby.

According to the present disclosure, a first polynomial (e.g., a prime polynomial) can be selected to generate a CRC for aggregated frames. The first polynomial can be selected for frames less than a predefined size, or for communication links which do not support a second polynomial. For example, an AP or non-AP device can transmit beacon frames, probe response frames, or frames addressed to devices which do not support the second polynomial. The second polynomial (e.g., a factorable polynomial) can be selected to generate a CRC for further aggregated frames. For example, the second polynomial can be selected on a frame-basis (e.g., for frames larger than a predefined size) or connection basis (e.g., for all communications with a particular device). The use of the second polynomial can aid in the detectability of errors as may further contribute to frame retransmission or correctability.

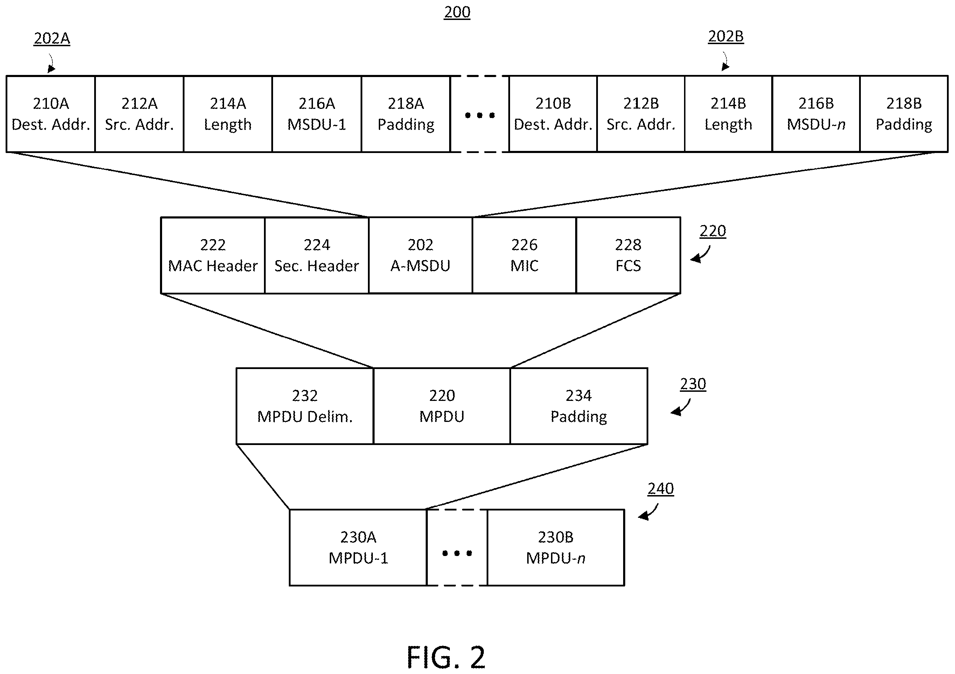

Referring now to FIG. 2, a register diagram 200 for aggregated frames is provided according to some embodiments. The register diagram 200 includes MAC Service Data Unit (MSDU) fields including a first MSDU subfield 202A and a second MSDU subfield 202B which can be referred to generally as aggregated MSDU (A-MSDU) subfields 202. Any number of MSDU may be included in an A-MSDU subfield 202, subject a maximum length of the A-MSDU subfield 202. For example, in some cases, tens or hundreds of further MSDU can be included (as may be referred to in sequence, as MSDU-1, MSDU-2... MSDU-n). In some cases, the depicted example of the second MSDU subfield 202B can immediately follow the first MSDU subfield 202A (e.g., the second MSDU subfield 202B can be MSDU-2).

Each MSDU of the A-MSDU subfield 202 corresponds to further subfields of the A-MSDU subfield 202. For example, a destination address subfield 210 indicating a destination for the MSDU, source address subfield 212 indicating a source of the MSDU, length subfield 214 indicating a length of the MSDU, and a payload portion (the MSDU subfield 216 itself) can be included in the A-MSDU subfield 202. In some embodiments, one or more MSDU subfield 216 of an A-MSDU subfield 202 includes padding 218 to align the MSDU subfield 216 to a boundary (e.g., to align each MSDU subfield 216 with a word boundary, such as for a thirty-two-bit word). In many cases, the repeated address subfields corresponding to the various MSDU subfield 216 may be duplicative with one another. However, in some cases (e.g., a router), data from varying flows may be aggregated into a same A-MSDU subfield 202. Further, the repeated data may aid in fragmentation, retransmission, or validation of received MSDU data.

A MAC Protocol Data Unit (MPDU) 220 packetizes the A-MSDU subfield 202 to further include a MAC header 222 as can include, for example, frame control data, duration and identification fields, sperate source/destination addresses for the packet, sequence numbering, or other data. The MPDU 220 can include a security header 224 for an initialization vector or key ID; a message integrity code (MIC) 226 to preserve data integrity, and a frame check sequence (FCS) subfield 228. The FCS subfield 228 refers to a subfield for a cyclic redundancy check (CRC) checksum determined according to a computation of the CRC according to a predetermined polynomial.

A cyclic redundancy check (CRC) may refer to or include an error detecting code that generates a checksum by dividing data by a predetermined binary polynomial, with the remainder used to detect transmission errors, according to some embodiments. Computation of the CRC may refer to or include binary division of input data, such as a data frame, by the predetermined binary polynomial. Detection of errors, in the context of CRCs, may refer to or include a discrepancy between a calculated CRC checksum and a received CRC checksum, in some embodiments. For example, the received CRC checksum may correspond to a frame check sequence (FCS) of an MPDU received in an MPDU frame, and the calculated CRC checksum can correspond to a checksum of the MPDU using a predefined polynomial.

A polynomial may refer to or include an algebraic expression including variables and coefficients, in some embodiments. For example, a binary polynomial includes a series of bits corresponding to present or absent terms (zeros and ones). For example, (1)x³ + (0)x²+(0)x¹+(1)x⁰ can be written as 1001. A prime polynomial refers to a polynomial that cannot be factored into simpler polynomials over a given field in some embodiments, much like a prime number is indivisible in arithmetic. In the context of cyclic redundancy checks (CRC), a prime binary polynomial may be used as the divisor in the error-checking process, as may exceed the performance of factorable polynomials for some applications or error types. A factorable polynomial is a polynomial that can be broken down into simpler polynomials over a given field, in some embodiments (e.g., the factorable polynomial can be expressed as the product of lower-degree polynomials). In the context of CRC, a factorable binary polynomial can aid in computational efficiency and can determine certain error patterns, such as odd number of errors for large frame sizes.

With further reference to the FCS subfield 228, the FCS can refer to a CRC checksum computed according to any of various polynomials. For example, a prime polynomial may be selected for at least some communications. Such communications can include communications with devices implementing different versions of a protocol (sometimes referred to, without limiting effect, as legacy devices). For example, a device implementing methods of the present disclosure can communicate with previously deployed AP or non-AP STA devices using an FCS determined according to the prime polynomial. The same device can communicate with other devices supporting the use of a factorable polynomial using an FCS determined using said factorable polynomial for at least some frames or types of frames (e.g., frames exceeding a length of the A-MSDU subfield 202). Where the device is not aware of a counterparty devices capability (e.g., when providing beacon frames or probe request frames), the device can use the prime polynomial to ensure all devices can decode such frames (or may use the factorable polynomial to avoid receipt of messaging by such devices).

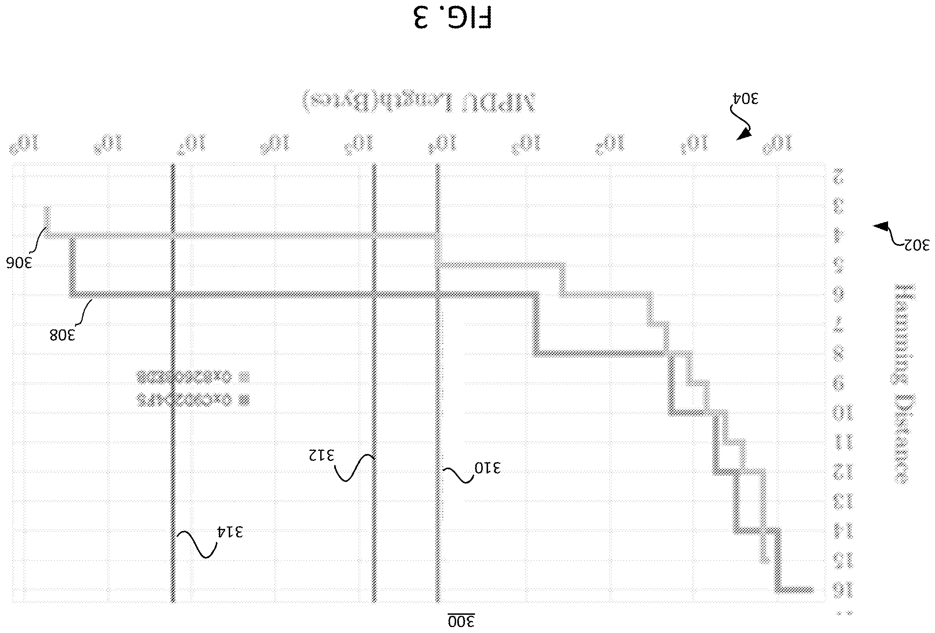

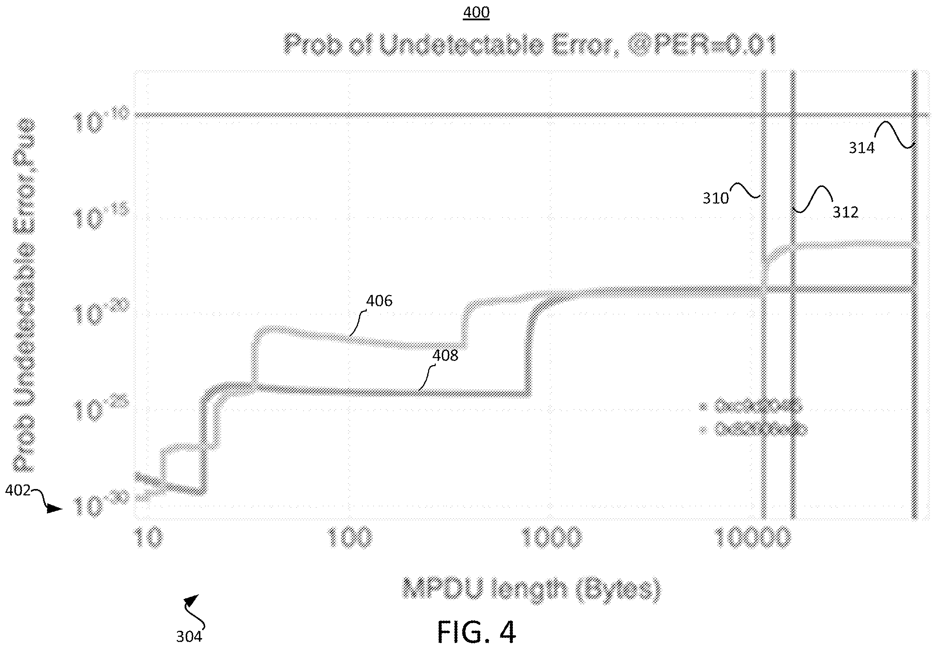

Accordingly, an AP or non-AP device can generate the FCS subfield 228 according to various polynomials, according to configuration settings, or inter-device arbitration processes, some examples of which are provided herein. The inclusion of a certain factorial polynomials can, for example, aid in the detection of multi-bit errors for A-MSDU subfields 202 which may not be detectable via an FCS subfield 228 populated with a CRC generated according to a prime polynomial. Some examples for selected polynomials are provided henceforth with regard to, for example, FIGS. 3 and 4.

Various MPDU 220 may framed together by delimiting constituent MPDU 220 of a frame with an MPDU delimiter 232 to form a subframe 230 (or a frame 240, for a single MPDU 220 frame). The MPDU delimiter 232 can include, for example, a length field, delimiter checksum, and a further set of flags or other indicators. As was described above with regard to the A-MSDU subfield 202, the subframe 230 can include a padding subfield 234 to align the MPDU 220 to a word boundary, such as thirty-two bits. Any number of subframes 230 (e.g., one or more), can be included in a frame 240. A frame 250 may be provided to a physical later (PHY) device for transmission. The frame may be referred to as an MPDU frame 220 for its inclusion of one or more MSDU subfields 216, as may be aggregated into an A-MSDU subfield 202. Such a nomenclature may refer to frames including any number of MSDU subfields 216, including single-MSDU frames.

The content (e.g., payload) of the frame 240 can include various information, as may be generated by one or more devices (e.g., an endpoint device, or multiple endpoint devices in communication with a switch or router). In some embodiments, the information can include aspects of a beamforming feedback matrix. This increased MPDU size can apply to various frames, such as HE CompressedBeamforming CQI frame. For example, a device operating according to the methods disclosed herein can provide channel state information of the beamforming feedback matrix as may be fragmented across fewer frames than according to other approaches. In some cases, a complete beamforming feedback matrix may be provided in a single frame, even where such a matrix can occupy hundreds of kilobytes to megabyte-scale sizes. For example, for a multiple output-multiple input device including one hundred-twenty-eight transmit antennae, sixteen receive antenna, two-hundred-forty subcarriers, and sixteen bits of resolution per element, a beamforming feedback matrix can occupy about a megabyte.

A beamforming feedback matrix may refer to or include a set of values transmitted by a receiving device in a network, providing information about the channel conditions between a transmitter (e.g., the AP) and receiver (e.g., a non-AP STA device). Provision of the data of this matrix to the transmitter can aid the transmitter to adjust beamforming parameters to improve signal direction and strength for transmission efficiency and interference management. The feedback matrix can include a state of various channels. Channel state information (CSI) may refer to or include properties of a particular communication channel, in some embodiments. For example, the CSI can include factors like signal attenuation, interference, and fading. The CSI may be used by a transmitter to adapt transmission parameters for improved data rates and reliability based on the particular conditions of the channel.

Referring now to FIG. 3, a hamming distance graph 300 for selected polynomials, as applied to codewords of variable lengths, is provided. The codewords can include, for example, the A-MSDU subfield 202 of FIG. 2, as may include one or more MSDU subfield 216, such as the depicted example of the first MSDU subfield 216A and the second MSDU subfield 216B. A first of the selected polynomials corresponds to a prime polynomial (and more particularly, to 0xC9D204F5). A second of the selected polynomials corresponds to a factorable polynomial (and more particularly, to 0x82608EDB). A hamming distance axis 302 depicts a number of changes to positions of a codeword (e.g., the A-MSDU subfield 202) corresponding to a checksum calculated according to a particular polynomial.

A codeword length axis 304 can correspond to a byte length of a codeword for which the CRC is generated (e.g., the value stored in the FCS subfield 228 or computed for comparison thereto). A first MPDU length 310 is indicated at 11,454 to indicate a limit for certain devices, corresponding to the reduction of the hamming distance to four with the prime polynomial. A second MPDU length 312 is provided at 2¹⁶ (sixty-four kilobytes); a third MPDU length 314 is provided at 2²⁴ (sixteen megabytes) to illustrate relative performance of the respective polynomials.

A change to an A-MSDU subfield 202 (or other codeword) can be detected when a number of positional changes (e.g., bit flips or transposed bits) is less than the hamming distance. Conversely, when a number of positional changes equals or exceeds the hamming distance, corrupted A-MSDU subfield 202 may not be detected (since the received CRC may be closer to a corrupted or other potential A-MSDU subfield 202).

A first hamming distance curve 306 corresponds to the first polynomial. As depicted, the first hamming distance curve 306 maintains a hamming distance of at least five bits for codewords (e.g., A-MSDU subfield 202) no larger than 11,454 bytes. Accordingly, for codewords of 11,454 bytes or less, at least three positional changes can be detected. A second hamming distance curve 308 corresponds to the second polynomial. As depicted, the second hamming distance curve 308 maintains a hamming distance of at least six bits for codewords larger than 11,454 bytes, such as sixty-four kilobytes or sixteen megabytes. Accordingly, even for codewords greater than sixteen megabytes, any error that causes up to five positional changes in bits will be detected.

FIG. 4 is an undetectable error graph 400 for selected polynomials, as applied to codewords of variable lengths, according to some embodiments. The depicted graph 400 is provided as corresponding to a packet error rate (PER) of one percent. An undetectable error rate axis 402 indicates a probability of undetectable errors, relative to a codeword length axis 304. Relative to the hamming distance graph 300 of FIG. 3, the present depiction exhibits greater complexity owing to various factors such as burst errors, interleaving effects, and non-uniform error distributions. Moreover, the undetectable error graph 400 may be modulated non-linearly according to changes in PER or for different error sources (e.g., transposition errors, delay offset errors, or single bit-flip errors), each of which and various combinations of which may benefit from the varying error detectability of a CRC computed using various polynomials.

A first undetectable error curve 406 exhibits a probability of undetectable errors corresponding to the prime polynomial (0x82608EDB) while a second undetectable error curve 408 corresponds to the factorable polynomial (0xC9D204F5). The illustrative examples of the provided polynomials are provided according to a little-endian format such that the least significant bit aligns with the constant term, indicating that the coefficients are ordered from the lowest degree to the highest degree. Specifically, the polynomial of 0x82608EDB can be presented as: g(x)= 1 + x + x2 + x4 + x5 + x7 + x8 + x10 + x11 + x12 + x16 + x22 + x23 +x26 +x32 The polynomial of 0xC9D204F5 can be presented as either of: g(x) = 1 + x + x3 + x5 + x6 + x7 + x8 + x11 + x18 + x21 + x23 + x24 + x25 + x28 + x31 + x32 or, as factored: (1 + x)(1 + x3 + x4 + x6 + x8 + x9 + x10 + x18 + x19 + x20 + x23 + x25 + x26 + x27 + x31).

Various codeword lengths may correspond to varying lengths of MSDU subfield 216 or A-MSDU subfield 202. The probability of undetected errors (e.g., a number of position changes exceeding the hamming distance) are provided according to the various codeword lengths. For some codeword lengths, the prime polynomial outperforms the factorable polynomial (as evidenced by the second undetectable error curve 408 exceeding the first undetectable error curve 406). For example, for a codewords less than about twenty bytes, or between about one thousand bytes and 11,454 bytes, the prime polynomial outperforms the factorable polynomial. For other codeword sizes, however, the factorable polynomial outperforms the prime polynomial. Particularly, for values greater than 11,454 bytes, the factorable polynomial exhibits an improved (lower) probability of undetected errors, at least to the limit of the codeword length axis 304 at about sixteen megabytes.

Although each of the selected polynomial outperforms the other of the selected polynomials for at least some regions of the codeword length axis 304, the current graph is provided according to an exponential scale. Accordingly, the difference between the first undetectable error curve 406 and the second undetectable error curve 408 for values between 11,454 bytes and sixteen megabytes varies by a factor of several hundred. Although the reverse is true for a packet size of twenty bytes, the absolute probability is far lower, as evidenced by the undetectable error rate axis 402. At an absolute probability of 10⁻²⁴ undetectable errors with a PER of 1 percent, an undetected error would, on average occur every several billion years on a continually transmitting gigabit link). By contrast, at an absolute probability of 10⁻¹⁶ undetectable errors with a PER of 1 percent, the undetected error could be expected in tens or hundreds of years. Accordingly, the selection of the second polynomial can improve undetectable error rates for large codewords (greater than 11,454 bytes), with little impact to smaller codewords. Further, in some embodiment of the present disclosure, different polynomials may be selected for different packet sizes, as may further improve performance (e.g., by using a prime polynomial for codewords less than 11,454 bytes, a detectability benefit is realized for packets greater than about one thousand bytes).

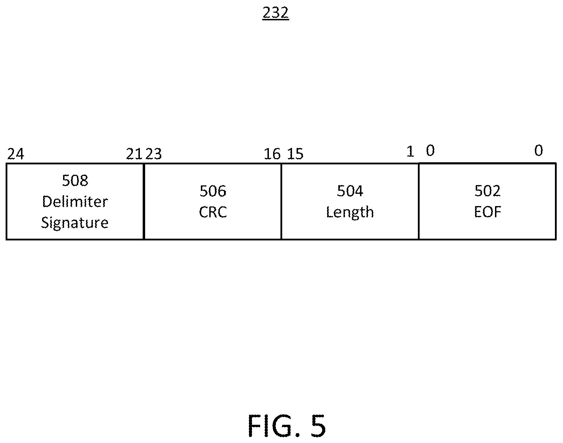

FIG. 5 is a register diagram 200 for an MPDU delimiter 232 subfield, according to some embodiments. The MPDU delimiter 232 subfield can precede each MPDU 220 of a subframe 230 for a frame 240. The MPDU delimiter 232 subfield includes an end of frame (EOF) subfield 502 (e.g., bitflag) to indicate the frame boundary. The MPDU delimiter 232 subfield includes a length subfield 504 to indicate (in bytes or octets), a length of the A-MSDU subfield 202. The length of the A-MSDU subfield 202 can be provided explicitly, or via a length of the MPDU 220, from which the length of the A-MSDU may be determined (e.g., by subtracting a predefined length of the MAC header 222, security header 224, MIC 226 and FCS subfield 228). The depicted example provides a fifteen-bit length field, as may be used to indicate an MPDU length up to about thirty-two kilobytes (e.g., sixteen kilobytes (16,384 bytes), twenty-four kilobytes (24,576 bytes), or thirty-two kilobytes (32,768 bytes)). In some embodiments, the length subfield 504 can include additional or fewer bytes according to additional or fewer included bits, or according to a byte-multiple (e.g., by providing the length on a word or doubleword basis).

A checksum subfield 506 (depicted as a CRC) can provide data integrity verification for the MPDU delimiter 232 itself. Such a CRC should not be conflated with a separate CRC of the FCS subfield 228. A delimiter signature subfield 508 can provide a recognizable bit pattern that marks the delimiter, or can include flags for, for example, QoS (Quality of Service) attributes, security settings, or other control information. Although not depicted, the MPDU delimiter 232, like other subfields of the present disclosure, can include padding bits, such as to align the MPDU delimiter 232 to a double word or other boundary. More generally, the depicted example of the MPDU delimiter 232 should not be construed as limiting; according to various embodiments of the present disclosure, the information of the MPDU delimiter 232 can be otherwise conveyed, such as according to different subfield sizes as the depicted illustrative example of a single bit EOF subfield 502, fifteen-bit length subfield 504, eight-bit CRC subfield 506, and three-bit delimiter signature subfield 508.

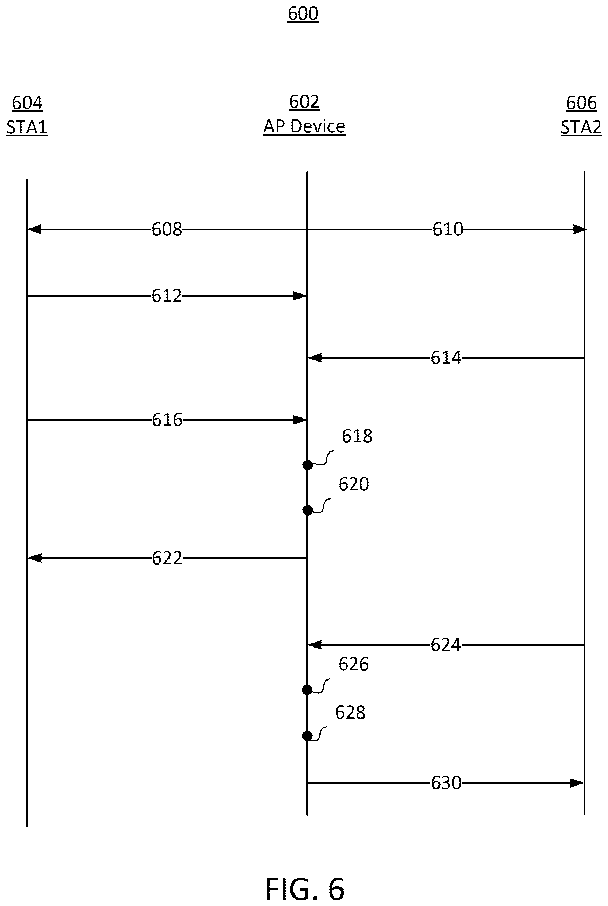

Referring now to FIG. 6, a sequence diagram 600 for data transmission is provided, according to some embodiments. The sequence diagram 600 can correspond to an environment including various devices. Depicted in FIG. 6 is an illustrative example of a first device 602 as an AP device, as coupled with further non-AP devices (depicted as a first STA device 604 and a second STA device 606). Various embodiments of the present disclosure further contemplate the sequence of operations as performed according to a substitution (e.g., inversion) of the AP and STA device roles. That is, the operations disclosed herein may be performed symmetrically between AP devices and non-AP STA devices. Further, the operations can be performed between two AP devices for inter-AP communications or between two non-AP STA devices, as in the case of an ad hoc network. Accordingly, although the sequence diagram 600 refers to communication between the AP device 602 and one or more STA devices 604, 606 to aid in the brevity of the disclosure, the operations provided herein may be performed between any two AP or non-AP STA devices.

An "access point" (AP) may refer to a device for communicatively coupling one or more "non-AP" devices (e.g., a client device) to a network, in some embodiments. More specifically, an AP may enable non-AP devices to connect and communicate with a network. In some embodiments, an AP may be a "wireless access point" (WAP) configured to enable wireless communication between non-AP devices. An AP includes but is not limited to a mobile, portable, or fixed hot spot, router, bridge, or other communication device. A non-AP device (sometimes referred to as a station or STA device) may refer to or include a device to consume services provided by a network other than an AP device, such as data exchange, internet access, or file sharing, in some embodiments. For example, in the context of a Wi-Fi network, a client device can include various non-AP STA devices such as mobile phones, tablets, laptop or desktop computers or internet of things (IOT) devices.

In brief overview, operations 608, 610, 612 and 614 depict an association (e.g., MAC association) between the various devices. Operations 616, 618, 620 and 622 depict a first sequence of operations as may be performed responsive to a determination of support for a CRC polynomial between at least two devices or a comparison of a size of an MPDU subfield 220 to a threshold (e.g., greater than 11,454 bytes). Operations 624, 626, 628 and 630 depict a second sequence of operations as may be performed responsive to a determination of non-support for a CRC polynomial between at least two devices or a comparison of a size of an MPDU subfield 220 to a threshold (e.g., not greater than 11,454 bytes).

MAC association may refer to or include the process by which a wireless device (STA) establishes a logical connection with an access point (AP) in a wireless network, as may be performed according to IEEE 802.11 standards, in some embodiments. During association, the station can exchange capability information, supported data rates, and other parameters with the AP, enabling the device to participate in network communication and allowing the AP to manage and track the station's presence on the network. For example, the MAC association can be completed using beacon frames, reassociation request frames, add block acknowledgment (ADDBA) request frame, or response frames such as probe response frames, reassociation response frames, or ADDBA response frames.

A beacon frame may refer to or include a management frame (e.g., for an IEEE 802.11 wireless network), to announce the presence of the network or capabilities thereof, in some embodiments. The beacon frame may be transmitted periodically by an access point (AP) to provide information such as network SSID, supported data rates, and timing synchronization. Such data may be provided according to various information elements (IE) included in the frame. These frames aid other device (e.g., STA devices) to detect, identify, join, or operate over the wireless network.

A response frame (e.g., a probe response frame) may refer to or include a type of management frame used in wireless communication, in response to another frame, such as an association request or probe request, in some embodiments. The response frame can carry information that acknowledges the receipt of the initiating frame and provides the necessary data to complete the requested action as may be provided in one or more IE, such as confirming network association or sharing network parameters (e.g., support for one or more predefined polynomials or lengths for fields such as an MPDU subfield 220).

An information element (IE) may refer to or include a unit of data carried within a frame, such as within management and control frames, in some embodiments (e.g., management and control frames of an IEEE 802.11 protocol). The IE can include a type identifier (Element ID), a length field, and the corresponding data field. Each information element can include specific parameters such as capabilities, supported data rates, security settings, or network configurations that aid devices to establish and maintain communication (e.g., Wi-Fi communication). Information elements are used during processes like authentication, association, beacon transmission, and roaming.

At operation 608 and 610, a device can advertise an information element (IE) indicating a maximum size for an MPDU frame 240 (e.g., a portion thereof). More particularly, according to the depicted sequence diagram 600, at operation 608, the AP device 602 can advertise the maximum size to the first STA device 604. At operation 610, the AP device 602 can advertise the maximum size to the second STA device 606. In some embodiments, operations 608 and 610 are performed concurrently (e.g., according to a transmission of a broadcast frame). In some embodiments, operations 608 and 610 are performed separately (e.g., according to a transmission of separate frames). The maximum size can correspond to an A-MSDU subfield 202 of the MPDU frames 240 (e.g., the byte length of an MPDU subfield 202 included in the frame 240). An MPDU frame 240 may refer to or include an MPDU frame 240 including one or more A-MSDU subfields 202. Each A-MSDU subfield 202 can include one or more MSDU subfields 216. The A-MSDU subfield 202 may, in turn, may be aggregated with any number of further A-MSDU subfield 202 into at least one MPDU subframe 230 included in a frame 240.

Advertisement may refer to or include any presentment of support, such as a presentment of support for a length of a subfield. For example, an advertisement can be provided in a beacon frame, as may be provided by an AP device to another device (e.g., another AP device or a non-AP STA device). In some embodiments, the advertisement can be provided responsive to another communication. For example, the advertisement (or a response thereto, at operations 612 or 614) can be provided in a probe response frame as may be provided responsive to a probe request frame, or an IE of the advertisement may be advertised in the probe request frame itself. The IE can include a maximum MPDU 220 length subfield (or a maximum MPDU length subfield). For example, the IE can include any of a high throughput (HT) capability IE, a very high throughput (VHT) capability IE, a high efficiency (HE) capability IE, or an extended capabilities IE, in some illustrative embodiments. In some instances, two devices may mutually advertise the maximum size for MPDU 220 frames according to a paired set of frames (e.g., where the second of the paired set is communicated to a counterparty device responsive to a receipt of the first of the paired set of frames from the counterparty device).

The maximum size may refer to or include a maximum size of a frame or portion thereof. For example, the maximum size can refer to a maximum size (e.g., byte length) of an MPDU 220, A-MSDU subfield 202, or other aspect of the frame 240. The maximum size may correspond to a maximum encodable or decodable length (e.g., decodable with an error detection confidence exceeding a threshold). In some cases, the maximum size may correspond to an availability of a selected polynomial for a CRC function of a device. However, further device attributes can define a smaller maximum size, in some embodiments. For example, in some embodiments, a maximum supported size may correspond to a buffer size, PHY supported size, or other aspect of a device, even where the CRC function could provide error detection for a greater size. The maximum size can be advertised according to a bit-flag, multi-bit selection, or literal length of a subfield of various of the advertisement (e.g., the IE), according to various embodiments. CRC encoding may refer to or include a calculation of a remainder of a division of a codeword by a generator polynomial. For example, the codeword may represent the MPDU 220 appended with a series of zeros corresponding to the degree of the polynomial. CRC decoding may refer to or include a calculation of a remainder obtained by dividing a received codeword by the generator polynomial. For example, the received codeword may represent the MPDU 220 along with the CRC checksum. If the remainder of the division is zero, the codeword may be considered valid; otherwise, an error may be detected.

At operation 612, the first STA device 604 responds to the advertisement of operation 608 with a supported maximum size of the first STA device 604. At operation 614, the second STA device 606 responds to the advertisement of operation 610 with a supported maximum size of the second STA device 606, and more particularly, with a maximum size equal to or less than 11,454 bytes. The responses can include a maximum size greater than, equal to, or less than the maximum size of operations 608 and 610. According to an illustrative example as is referred to henceforth, the maximum size of the first STA device 604 (at operation 612) equals or exceeds the maximum size advertised at operation 608 (e.g., exceeds 11,454 bytes) and the maximum size of the second STA device 606 (at operation 614) is less than the maximum size advertised at operation 610 (e.g., does not exceed 11,454 bytes).

A device can determine a maximum supported size according to a lesser of a supported length of two devices in communication (e.g., itself and a counterparty device). The AP device 602 can determine that, for communications with the first STA device 604, a maximum supported size exceeds 11,454 bytes. For example, a maximum supported size of sixty-four kilobytes may be selected incident to mutual support therefore (e.g., one of the AP device 602 or the first STA device 604 can correspond to a maximum size of sixteen megabytes and the other of the AP device 602 or the first STA device 604 can correspond to a maximum size of sixty-four kilobytes). Accordingly, each of the AP device 602 and the first STA device 604 can determine a first maximum size for communication therebetween (e.g., a maximum size corresponding to a selection of a particular polynomial for CRC checking, such as the illustrative example of the factorable polynomial provided herein). Analogously, each of the AP device 602 and the second STA device 606 can determine a second maximum size for communication therebetween (e.g., a maximum size corresponding to a selection of a particular polynomial for CRC checking, such as the illustrative example of the prime polynomial provided herein).

Based on the determined maximum size, as may be determined according to the advertised maximum size and the maximum size of the response, a device can select polynomial for a cyclic redundancy check (CRC) for MPDU frames 240.

Based at least on the information exchanges at operation 612, AP device 602 communications sent to or received from the first STA device 604 can be provided according to a maximum shared size. For example, the AP device 602 can compute a CRC (for the FCS subfield 228) using a factorable polynomial and include the computed CRC for transmission to the first STA device 604. In some embodiments, the AP device 602 can use a same polynomial for all communications with the first AP STA 604 on a per device-basis. In some embodiments, the AP device 602 can use a polynomial for communications with the first STA device 604 on a per frame-basis or a per frame-portion-basis, such as on an A-MSDU subfield 202 or MPDU 220 basis. Accordingly, a same frame 240 can include some MPDU 220 including an FCS subfield 228 determined according to a CRC computation using a first polynomial and some MPDU 220 including an FCS subfield 228 determined according to a CRC computation using a second polynomial. For example, such an implementation can aggregate various communications of endpoint devices by a router, switch, or other device.

Based at least on the execution of operation 614, AP device 602 communications sent to or received from the second STA device 606 can be provided according to a maximum shared size. For example, the AP device 602 can compute a CRC using a prime polynomial and include the computed CRC in the FCS subfield 228 in transmissions to the second STA device 606 (e.g., at operation 622). Likewise, the second STA device 606 can compute a CRC using a prime polynomial and include the computed CRC in the FCS subfield 228 of frames 240 transmitted to the AP device 602 (e.g., at operation 630).

At operation 616, the AP device 602 receives an MPDU frame 240 from the first STA device 604. Response to the receipt of the A-MSDU frame, the AP device 602 executes operation 618. At operation 618, the AP device 602 determines whether an error is present in the received frame. To determine the presence of the error, the AP device 602 may be configured to decode as least a portion of the A-MSDU frame according to a polynomial. For example, the AP device 602 can use a selected polynomial (e.g., the factorable polynomial) to compute a CRC for one or more MPDU subfields 220 of the received frame, and comparison to a value received in the FCS subfield 228. Incident to a detection of an error, the AP device 602 may further execute an error correction code or indicate a non-acknowledgment of a receipt of data. Such acknowledgment can be provided according to, for example, an omission of an acknowledgement (ACK), a communication of a non-acknowledgement (NACK), or other indications such as a bitflag for retransmission. Operations 616 and 618 can be repeated for various frames 240 as may be communicated from the first STA device 604 to the AP device 602.

At operation 620, the AP device 602 computes a CRC checksum using the selected polynomial the CRC for data intended for transmission to the first STA device 604 (e.g., incident to and prior to a transmission of a frame to the first STA device 604 at operation 622). At operation 622, the AP device 602 transmits a frame included the computed CRC to the first STA device 604. For example, the CRC can be communicated in the FCS subfield 228. As for operations 616 and 618, operations 620 and 622 can be repeated for various frames 240 as may be communicated from the AP device 602 to the first STA device 604.

As indicated above, operations 624-630 depict a sequence of operations as may be performed responsive to a determination of non-support for a factorable polynomial. Such a determination may be incident to a determination that the device (e.g., the second STA device 606) does not support the factorable polynomial, or that a frame (e.g., a portion thereof, such as the MPDU) does not exceed a threshold (e.g., 11,454 bytes). For example, at operation 624, the AP device 602 can receive a frame from a second device (e.g., the first STA device 604 or the second STA device 606). At operation 626, the AP device 602 can compute a CRC for the received frame (e.g., a portion thereof) according to the prime polynomial, and compare the computed polynomial to the received FCS subfield 228 to determine whether an error is present in the frame 240. At operation 628, the AP device 602 can compute a CRC for a message to be conveyed to the second STA device 606 using the prime polynomial. At operation 630, the AP device 602 can transmit a frame 240 to the second STA device 606. The frame 240 can include the CRC computed using the prime polynomial (e.g., via the FCS subfield 228).

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure may reference terms such as "first" and "second" in connection with devices, mode of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected includes indirect and direct couplings and connections.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above-described embodiments, methods, and examples, but by all embodiments and methods within the scope and spirit of the disclosure. The headings provided in this document are non-limiting.

The applications and servers have been described above with the aid of functional building blocks illustrating the performance of certain significant functions. The boundaries of these functional building blocks have been arbitrarily defined for convenience of description. Functions and structures can be integrated together across such boundaries. Alternate boundaries could be defined as long as the certain significant functions are appropriately performed. Similarly, flow diagram blocks may also have been arbitrarily defined herein to illustrate certain significant functionality. To the extent used, the flow boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A system comprising:
a first device (602) configured to:
advertise a first information element indicating a first maximum size for MAC protocol data unit, MPDU, frames for the first device (602);
select, based at least on the first maximum size, a first polynomial for a cyclic redundancy check, CRC, for an MPDU frame received from a second device (604, 606);
compute, using the selected first polynomial, a CRC for the received MPDU frame; and
detect, based at least on the computed CRC, an error in the MPDU frame.

2. The system of claim 1, wherein the first device (602) is configured to:
advertise the first information element incident to media access control, MAC, association between the first device (602) and the second device (604, 606);
select the first polynomial responsive to the receipt of a first response to the first information element indicating the first maximum size for MPDU frames for the second device (604, 606); and
select a second polynomial, different from the first polynomial, responsive to the receipt of a second response to the first information element indicating a second maximum size for MPDU frames for the second device (604, 606).

3. The system of claim 2, wherein the first device (602) is configured to:
transmit, using the second polynomial, beacon frames or probe response frames; and
transmit, using the first polynomial, other frames to the second device (604, 606).

4. The system of claim 2 or 3, wherein:
the first polynomial is a factorable polynomial; and
the second polynomial is a prime polynomial.

5. The system of any of claims 2 to 4, wherein the first maximum size is greater than 11,454 bytes;
in particular wherein the first polynomial is 0xC9D204F5.

6. The system of any of claims 1 to 5, wherein the first information element is comprised within one of:
a beacon frame;
a probe response frame;
a reassociation request frame;
a reassociation response frame;
an add block acknowledgment, ADDBA, request frame; or
an ADDBA Response Frame.

7. The system of any of claims 1 to 6, comprising at least one of the following features:
wherein the first device (602) is an AP device, and the second device (604, 606) is a non-AP device;
wherein the MPDU frame comprises channel state information of a beamforming feedback matrix.

8. A method comprising:
advertising, by a first device (602), a first maximum size for MAC protocol data unit, MPDU, frames for the first device (602);
selecting, based at least on the first maximum size, a first polynomial for a cyclic redundancy check, CRC, for an MPDU frame received from a second device (604, 606);
computing, using the selected first polynomial, a CRC for the received MPDU frame; and
detecting, based at least on the computed CRC, an error in the MPDU frame.

9. The method of claim 8, comprising at least one of the following features:
further comprising:
receiving, by the first device (602), a response from the second device (604, 606) indicating a second maximum size for MPDU frames for the second device (604, 606); and
selecting a second polynomial based at least on the second maximum size, the first maximum size exceeding the second maximum size;
wherein the advertisement of the first maximum size is provided in a first information element incident to media access control, MAC, association between the first device (602) and the second device (604, 606).

10. The method of claim 8 or 9, further comprising:
transmitting, by the first device (602), beacon frames or probe response frames using a second polynomial, smaller than the first polynomial; and
transmitting, by the first device (602) to the second device (604, 606), other frames using the first polynomial to the second device (604, 606).

11. The method of claim 10, further comprising:
using the second polynomial for one or more of:
CRC encoding; or
CRC decoding, wherein
the first polynomial is 0xC9D204F5.

12. The method of any of claims 8 to 11, comprising at least one of the following features:
wherein the first device (602) is an AP device, and the second device (604, 606) is a non-AP device;
wherein the MPDU comprises a complete beamforming feedback matrix including channel state information for a plurality of channels.

13. A device configured to:
advertise a first information element indicating a first maximum size for MAC protocol data unit, MPDU, frames for the device;
select, based at least on the first maximum size, a factorable polynomial for a cyclic redundancy check, CRC, for an MPDU frame received from a second device (604, 606);
compute, using the factorable polynomial, a CRC for the received MPDU frame; and
detect, based at least on the computed CRC, an error in the MPDU frame.

14. The device of claim 13, further configured to:
advertise the first maximum size for MPDU frames to a third device;
select, based at least on a response from the third device, a prime polynomial for a cyclic redundancy check, CRC, for a second MPDU frame received from the third device;
compute, using the prime polynomial, a second CRC for the received MPDU frame; and
detect, based at least on the second computed CRC, an error in the second MPDU frame.

15. The device of claim 14, comprising at least one of the following features:
wherein:
the first information element is a beacon frame; and
the response is comprised in a probe response frame corresponding to the beacon frame;
wherein the MPDU frame comprises channel state information of a beamforming feedback matrix.
